Europäisches Patentamt

European Patent Office

Office européen des brevets

(11) Publication number: **0 243 197 B1**

# EUROPEAN PATENT SPECIFICATION

(45) Date of publication of patent specification: **27.12.91**

(51) Int. Cl.⁵: **B08B  9/02**, B24B 9/00, B23K 37/02

(21) Application number: 87303634.7

(22) Date of filing: 24.04.87

(54) Tools for operating on pipes.

(30) Priority: **25.04.86 GB 8610189**

(43) Date of publication of application:
**28.10.87 Bulletin  87/44**

(45) Publication of the grant of the patent:
**27.12.91 Bulletin  91/52**

(84) Designated Contracting States:
**AT BE CH DE ES FR GR IT LI LU NL SE**

(56) References cited:
**DE-B- 1 290 843**
**GB-A- 2 159 743**
**US-A- 2 545 329**
**US-A- 3 501 872**
**US-A- 4 368 876**

(73) Proprietor: **FRIEDRICHSFELD AG**
**P.O. Box 710261**
**W-6800 Mannheim 71(DE)**

(72) Inventor: **Tasker, Bruce Allan**
**16 Bank Street**
**Lutterworth Leicester(GB)**

(74) Representative: **Spoor, Brian et al**
**c/o E.N. LEWIS & TAYLOR 144 New Walk**
**Leicester, LE1 7JA(GB)**

## Description

The invention relates to tools for preparing the surfaces of end portions of pipes according to the preamble of claim 1. Such pipes may be of plastics material.

Various systems have been previously proposed for working from the inner or outer surfaces of pipes or the like. EP-A-0000808 describes an apparatus for cleaning and descaling the outside of pipe lines comprising a cage mountable on the pipe line and bearing a carriage moveable on the cage around the pipe line. The carriage supports an elongate arm to lie in the longitudinal direction of the pipe and a cleaning head is reciprocable along the arm to clean the exterior of the pipe. The cage is provided with an indexing mechanism to step the carriage around the pipe line.

US 5301 872 describes an internal pipe beveling attachment from pipe beveling machines comprising an indexing wheel which rides around the periphery of a pipe. A cutter or grinder is carried on the support structure from the indexing wheel and serves to bevel the inside of the pipe as the wheel moves around the periphery. DE-A-1290843 describes apparatus for the beveling or machining the inside surface of a pipe end comprising a frame which is securely attached to the outer surface of the pipe having a grinding mechanism connected thereto. The grinding mechanism includes a grinding wheel which is moved in a generally circular path while being reciprocated to grind the inner surface of the pipe.

GB 2159743B discloses a scraper for scraping cylindrical objects such as the ends of pipes. In this specification the scraper consists of a helically bladed rotary scraping member mounted in a frame, the member being rotated circumferentially round the end of a pipe so that a longitudinal scrape occurs along a length of the pipe at or adjacent the end thereof.

The need for such tools has become apparent in recent years, for example with the advent of pipe connectors which connect together adjacent lengths of such pipes by thermal welding. Such connectors comprise a collar of thermoplastics material for surrounding a pair of aligned thermoplastics pipes and straddling the junction between those pipes. Into the inside wall of the thermoplastics connector is inlaid an electrical resistance wire and, by passing an electrical current through this wire, the thermoplastics material of the connector is melted to weld the connector to the aligned pipes.

Experience in the field has shown that there is a problem connected with the use of such pipe connectors. Not only must the pipe ends be cleaned in situ to remove mud, moisture and grit, but also the thin oxide layer around the outside of the plastics pipe must be removed to obtain the strongest possible weld. Hand-held scraper devices have been used to achieve this cleaning. Such devices generally comprise hand-held scraper tools which in use are drawn longitudinally of the pipe in a series of strokes, each stroke filing or planing away a surface portion of the pipe. The main disadvantages of such hand-held tools are that they do not prevent the user from scraping away different amounts at different angular positions around the pipe, so that the resulting pipe is non-circular, and that they are difficult or even impossible to use in on-site conditions when the pipes to be cleaned and joined may be located deep in a trench in the ground. In such conditions the tendency is for the user to clean only the upper, visible, part of the pipe and to ignore or inadequately clean the underside of the pipe.

It is therefore an object of the invention to provide a tool that is capable of use in on-site conditions, with consistent results.

The invention provides a tool for preparing the surfaces of end portions of pipes for jointing, said tool comprising a support frame mountable on the end portion of a pipe to be cleaned; means for moving the support frame in a circumferential path around the end portion of the pipe, mounted on the support frame for treating a portion of the outer surface of the pipe as the support frame travels its circumferential path around the pipe, characterised in that means are provided for progressively moving the treatment means longitudinally of the support frame and pipe as the support frame travels its circumferential path around the pipe, to impart to the treatment means a helical movement over the surface of the pipe.

Advantageously, the abrading means is a scraper for scouring said outer surface.

The helical movement being achieved by a combination of the circumferential movement of the support frame around the pipe and longitudinal movement of the abrading means relative to the support frame and thus the pipe, results in the fact that by the time the treatment or operating (scraper) means has moved longitudinally for a complete traverse of the support frame, a complete end portion of the pipe has been prepared and has had its surface oxide film removed. This prepared end portion need not extend completely to the end of the pipe; it is sufficient that the prepared end portion should span the axial zone of the pipe connector which in use is to be heated for fusion to the pipe.

The direction of longitudinal movement imparted to the scraper means may be towards or away from the pipe end. Movement of the scraper means towards the pipe end does provide the advantage, however, that the reaction force on the tool or pipe scraper would then be in a direction to draw the pipe scraper firmly onto the pipe end as opposed to pushing it off the pipe end.

The support frame preferably comprises rollers which engage the pipe surface and hold the pipe scraper on the pipe as it is moved in its circular path around the pipe. The rollers may be provided so as to contact different angular locations around the outer and/or inner peripheral surfaces of the pipe. If desired, the rollers may be on two or more axes, with the rollers on one of those axes engaging the outer surface of the pipe substantially in line with the scraper means, to define a predetermined alignment of the scraper means. In example of the invention the relative positions of the axes on which the rollers are mounted may be adjustable, to accommodate pipes of different sizes. If desired, a mechanical locking device may be associated with one or more of the axes, to move the axes mutually together or apart to grip the pipe between the rollers. For example, if the axes are moved mutually together to grip the pipe, then with the axes separated the scraper can easily be fitted on an end of the pipe. Then actuation of the mechanical locking device moves the axes mutually together to grip the pipe and hold the scraper securely on the pipe. Release of the locking device may if desired cause the axes to move apart under a spring bias to facilitate the removal of the scraper. The mechanical locking device may for example comprise a cam, a screw or a ratchet.

The scraper means may be a movable cutter, such as a rotary grinding wheel or cutter head; or it may be a fixed cutter such as a rasp or plane blade. Advantageously the cutter, which may be carried by a cutter block, may be biased, relative to the support frame, in a direction against the pipe outer surface. A load is thus exerted by the cutter which is preferably perpendicular to the pipe surface and the self-adjusting bias of the cutter mounting ensures that the cutting edge remains firmly in contact with the pipe surface irrespective of the curvature or contour of the pipe.

Many different means may be provided for achieving regular longitudinal movement of the scraper means along a guide member of the support frame as the support frame travels its circular path around the pipe. Preferably the means for moving the scraper means may comprise a lead screw geared to the means for moving the support frame, which lead screw engages the scraper means for advancing the scraper means relative to the support frame on movement of the support frame in its circular path around the end portion of the pipe.

A pipe scraper according to the invention can be used in even the cramped conditions that subsist at the bottom of a pipe-laying trench, and make it possible for the user quickly and efficiently to scrape clean the end 15 - 25 centimetres or thereabouts of the pipe, immediately before fitting and heat welding a resistance wire heated pipe connector.

There will now be described an example of a tool according to the invention. It will be understood that the description which is to be read with reference to the drawings is given by way of example only and not by way of limitation.

In the drawings:

| Figure 1 | is a side view partly in section of a tool in the form of a scraper according to the invention, having a roller in a first position; |
| Figure 2 | is a side view corresponding to Figure 1 having the roller in a second position; |
| Figure 3 | is rear view of the scraper; |
| Figure 4 | is an end view of the scraper; and |
| Figures 5 - 8 | are various views of a scraper means in the form of a cutter. |

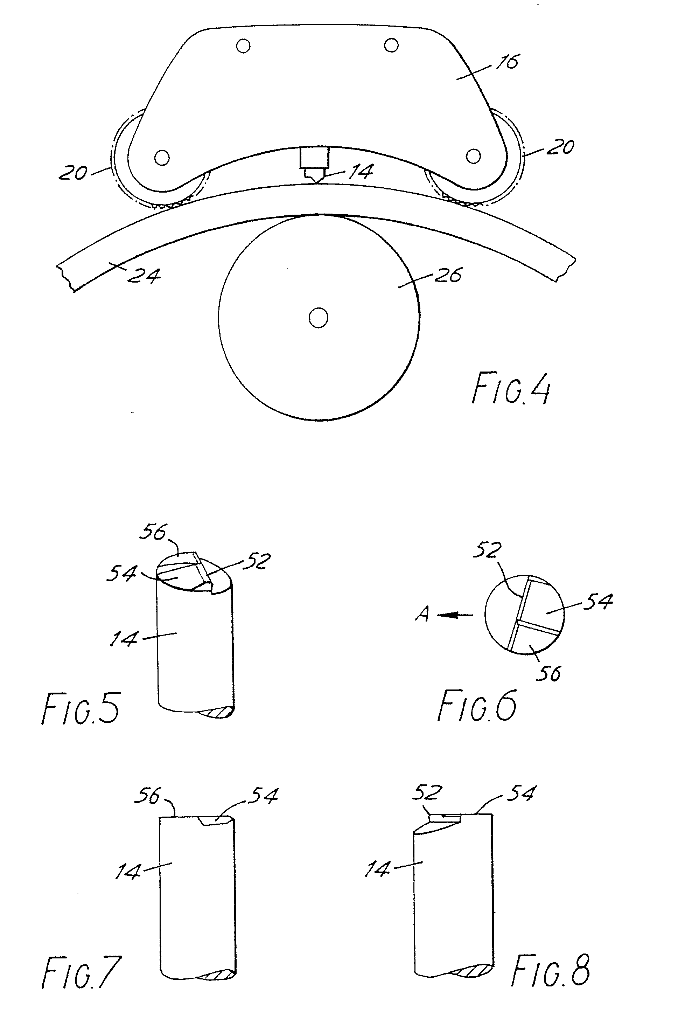

The pipe scraper illustrated in the Figures comprises a support frame 2 comprising a platform portion 4 and two extension portions 6 at right angles to the platform and supporting a pair of guide rails 8, 10. Mounted for longitudinal movement upon the guide rails 8,10, is a block 12 which supports a cutter 14 in a manner to be described below. The guide rails are linked at their outer ends by a cross piece 16 which supports two slidable rods 18 on which are provided, one upon each rod, a pair of guide rollers 20 having splined, pipe-contacting surfaces. Two further, similar rollers 22 are mounted for rotation in the extension portions 6. The rollers 20, 22 are mounted for contact with an external surface of a pipe 24 (see Figure 4).

The platform portion 4 of the frame 2 supports a further pipe-contacting roller 26 which is intended to contact the internal surface of the pipe as shown in Figure 4.

The roller 26 which in the present example is of a diabolo configuration, is mounted for movement between an inoperative position shown in Figure 1 in which a pipe end may readily be inserted between the roller 26 and the rollers 20 and 22, and an operative position shown in Figures 2 and 4. The roller 26 is rotatably mounted on a bearing mounting 28 pivotally supported at 30 on an end portion of an L-shaped arm 32. The arm 32 passes through an aperture 34 in the platform 4 the underside of which platform provides a reaction surface 36 for a free end of the arm 32.

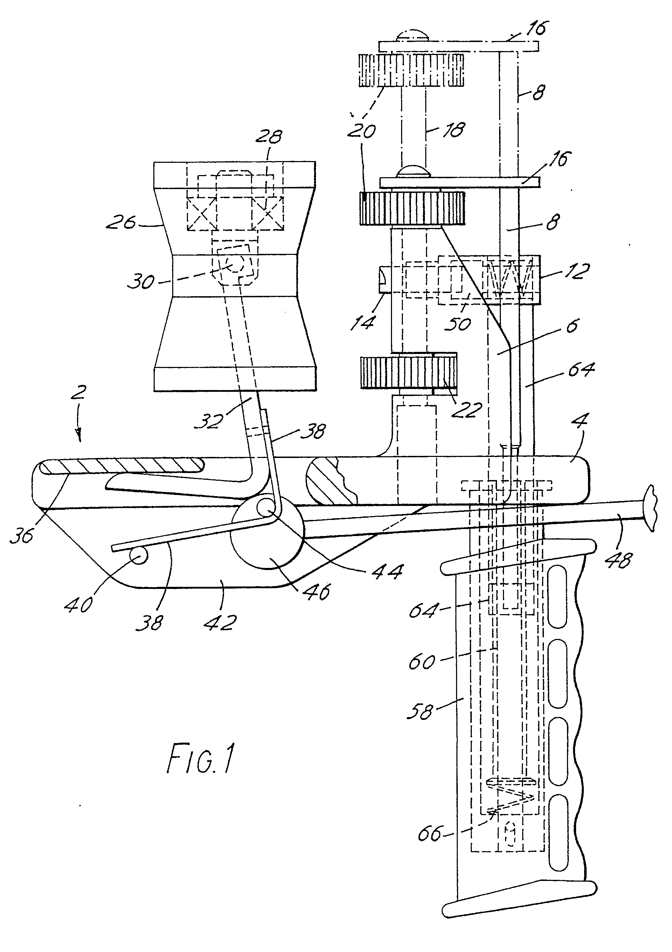

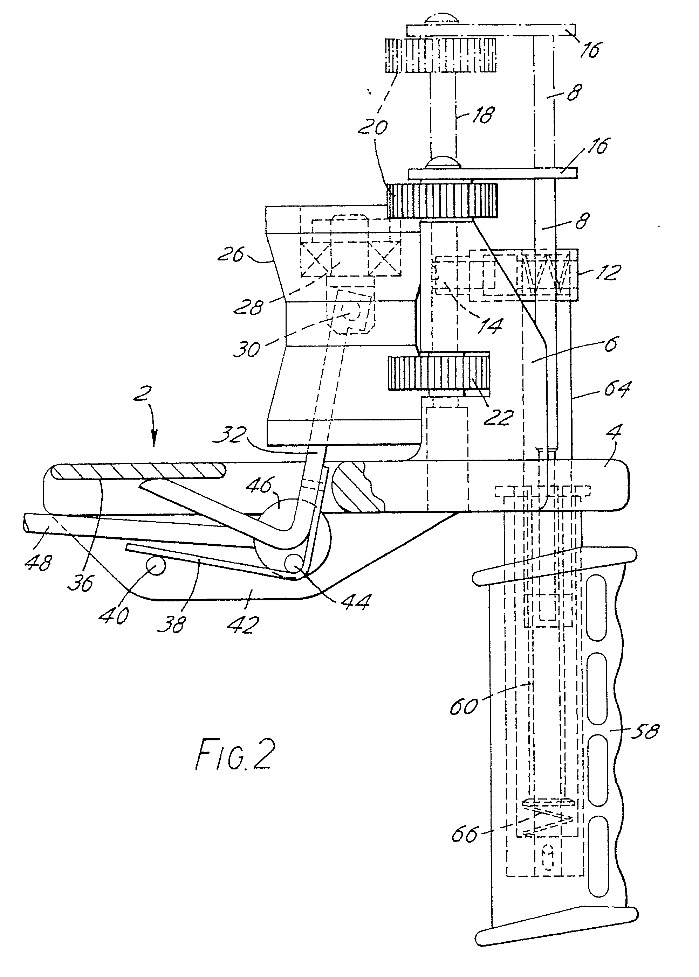

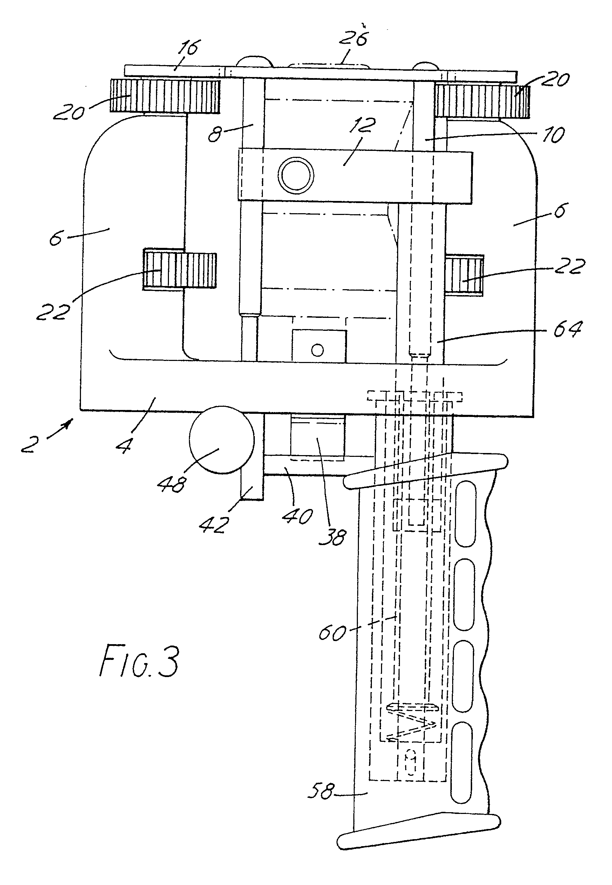

Secured to the arm 32 is a leaf spring 38, the free end of which bears against a rod 40 spanning two flanges 42 depending from the platform portion 4. At an intermediate region of the spring 38 it is caused to turn through approximately 90° about a control rod 44 of a lever-operated cam arrangement 46 mounted in the flanges 42. When the lever 48 is moved clockwise from the position shown in Figure 1 to the position shown in Figure 2, the control rod 44 moves from a position sited at the upper part of the cam arrangment 46, as viewed in the Figures, to a position at the lower part thereof. This causes the arm 32 to move from a position in which the roller 26 is inoperative into a position in which the roller 26 firmly clamps the pipe 24 against the rollers 20 and 22, the leaf spring 38 acting as a spring-biasing means.

When the pipe is clamped in this manner, the external surface thereof is contacted by the cutter 14. The cutter is received in the block 12 in a spring-loaded mounting 50 which permits accommodation of a range of pipe diameters, and/or irregularities in contour or surface characteristics.

The form of the cutter 14 is illustrated in Figures 5 to 8. The cutting tip comprises a cutter edge 52 arranged at an oblique angle, in the present example approximately 15° with respect to the axis of the portion of the pipe being scraped thereby. The direction of travel of the tool is shown by arrow A.

The portion of the circular surface of the tip behind the edge 52 slopes away at 54. However, the edge 52 extends only partially along a chord of the circle. A surface 56 adjacent to the surface 54 is formed as a land in the radial plane of the tip and is adapted to contact the pipe surface as it is cut, to control the depth of the cut.

Once the pipe is clamped, the cutter 14 is caused to scrape a helical sliver from the external surface of the pipe by grasping a handle 58 of the scraper and causing the scraper to progress around the periphery of the pipe end.

The operation of the handle is as follows. As the peripheral progress is carried out, the handle itself is mounted so as not to rotate in the user's hand, although the scraper revolves about the axis of the pipe. Thus a lead screw arrangement 60 received within an internally threaded bore of the handle 58 acts to cause longitudinal movement of a sleeve 64 surrounding the screw arrangement and secured at its upper end to the block 12. Therefore, as the peripheral movement of the scraper progresses the sleeve is retracted into the handle and thus causes the block 12 to move downwardly (as viewed in Figures 1 and 2) to provide the required helical movement. It will be appreciated that at the end of the scraping operation the end portion of the thread of the lead screw may be provided with safety means to prevent damage in the event of an attempt to make additional turns of the apparatus. In the present example this damage prevented by the provision of a safety loop of the internal thread, re-engagement of the main thread being achieved by the provision of a biasing spring 66.

Where the diameter or thickness of the pipe 24 makes it desirable, adjustment may be made to the distance between the planes of rotation of the rollers 20 and 22. This is achieved by providing telescopic means whereby the length of the rails 8 and 10 may be extended as shown in dotted lines in Figures 1 and 2. This entails partial withdrawal of the slidable rods 18 from the extension portion 6.

Various modifications may be made within the scope of the invention as defined in the following claims.

## Claims

1. A tool for preparing the surfaces of end portions of pipes for jointing said tool comprising a support frame (2) mountable on the end portion of a pipe (24) to be cleaned, means (58) for moving the support frame in a circumferential path around the end portion of the pipe, means (14) mounted on the support frame for treating a portion of the outer surface of the pipe as the support frame travels its circumferential path around the pipe, characterised in that means (60, 64) are provided for progressively moving the treatment means (14) longitudinally of the support frame (2) and pipe (24) as the support frame travels its circumferential path around the pipe, to impart to the treatment means (14) helical movement over the surface of the pipe.

2. A tool according to claim 1 characterised in that rollers (20) are provided which are adapted in use to grip at least external wall surfaces of the pipe (24).

3. A tool according to claim 2 characterised in that at least one further roller (26) is provided which is adapted to engage an internal wall surface of the pipe (24).

4. A tool according to claim 3, characterised in that clamping means (44, 46, 32) are provided to clamp a pipe wall between said rollers (20, 26).

5. A tool according to any one of claims 2 to 4 characterised in that selected ones of said rollers (20, 26) are provided with roughened pipe-engaging surfaces.

6. A tool according to claim 4 or 5, characterised in that the clamping means comprise a cam-operated lever arrangement adapted to bias said further roller (26) towards the operating means (14).

7. A tool according to claim 4, 5 or 6 characterised in that clamping means is provided with a spring-biased mounting (38) to accommodate a range of pipe diameters and contour or surface irregularities.

8. A tool according to any one of the previous claims, characterised in that the treatment means is a scraper means (14).

9. A tool according to claim 8 characterised in that the scraper means comprises a cutter.

10. A tool according to claim 9 characterised in that the cutter is provided with a spring-biased mounting (50) to enable the cutter to maintain constant cutting contact with the pipe.

11. A tool according to claim 9 or characterised in that the cutter tip comprises a cutting edge (52) and a land (56) adjacent thereto, said land adapted in use to contact an external wall surface of the pipe to control the depth of cut.

12. A tool according to claim 11 characterised in that the cutting edge is arranged at an oblique angle to the axis of the pipe.

13. A tool according to claim 2, characterised in that there are provided two spaced apart pairs of rollers (20,22), means (18) being provided for varying the longitudinal distance by which said pairs of rollers are spaced.

14. A tool according to any preceding claim, characterised in that means for moving the treatment means comprises a lead screw arrangement (60) controlled by the means (58) for moving the support frame (2), which lead screw causes the scraper means (4) to advance relative to the support frame (2) on movement of the support frame in its circumferential path around the end portion of the pipe.

**Revendications**

1. Outil destiné à préparer les surfaces des portions d'extrémité de conduites ou tuyaux en vue de leur raccordement, cet outil étant constitué par un châssis de support (2) pouvant être monté sur la portion d'extrémité de la conduite ou tuyau (24) à nettoyer, des moyens (58) destinés à déplacer le châssis de support sur une trajectoire circonférentielle autour de la portion d'extrémité de la conduite, des moyens (14) montés sur le châssis de support pour traiter une portion de la surface extérieure de la conduite à mesure que le châssis de support se déplace sur sa trajectoire circonférentielle autour de la conduite, caractérisé en ce que des moyens (60, 64) sont prévus pour déplacer progressivement les moyens de traitement (14) longitudinalement par rapport au châssis de support (2) et à la conduite (24) à mesure que le châssis de support se déplace sur sa trajectoire circonférentielle autour de la conduite, pour imprimer aux moyens de traitement (14) un mouvement hélicoïdal sur la surface de la conduite.

2. Outil selon la revendication 1, caractérisé en ce que sont prévus des rouleaux (20), rouleaux qui sont aptes pendant l'utilisation à adhérer au moins sur les surfaces de paroi extérieures de la conduite (24).

3. Outil selon la revendication 2, caractérisé en ce qu'au moins un rouleau supplémentaire (26) est prévu, lequel rouleau est apte à coopérer avec une surface de paroi interne de la conduite (24).

4. Outil selon la revendication 3, caractérisé en ce que des moyens de serrage (44, 46, 32) sont prévus pour brider une paroi de conduite entre les rouleaux (20, 26).

5. Outil selon l'une quelconque des revendications 2 à 4, caractérisé en ce que des rouleaux sélectionnés parmi les rouleaux (20, 26) sont munis de surfaces rendues rugueuses pour la coopération avec la conduite.

6. Outil selon la revendication 4 ou 5, caractérisé en ce que les moyens de serrage comprennent un dispositif à levier actionné par une came apte à solliciter en précontrainte le rouleau supplémentaire (26) en direction du moyen d'actionnement (14).

7. Outil selon la revendication 4, 5 ou 6 caractérisé en ce que les moyens de serrage sont munis d'un montage chargé en précontrainte par un ressort (38) pouvant recevoir une variété de diamètres de conduites et d'irrégularités de surfaces ou de contours.

8. Outil selon l'une quelconque des revendications précédentes, caractérisé en ce que les moyens de traitement sont constitués par un moyen de raclage (14).

9. Outil selon la revendication 8, caractérisé en ce que le moyen de raclage comprend un dispositif de coupe.

10. Outil selon la revendication 9, caractérisé en ce que l'outil de coupe est muni d'un montage chargé en précontrainte par un ressort (50) pour permettre à l'outil de coupe de conserver un contact de coupe constant avec la conduite.

11. Outil selon la revendication 9, caractérisé en ce que la pointe de l'outil de coupe est constituée par un bord de coupe (52) et un listel (56) contigü à celui-ci, ce listel étant apte pendant l'utilisation à venir en contact avec une surface de paroi extérieure de la conduite pour le réglage de la profondeur de coupe.

12. Outil selon la revendication 11, caractérisé en ce que le bord de coupe est disposé selon un angle oblique par rapport à l'axe de la conduite.

13. Outil selon la revendication 2, caractérisé en ce que sont prévues deux paires de rouleaux espacées entre elles (20, 22), des moyens (18) étant agencés pour faire varier la distance longitudinale selon laquelle sont espacées les paires de rouleaux.

14. Outil selon l'une quelconque des revendications précédentes, caractérisé en ce que les moyens prévus pour déplacer les moyens de traitement sont constitués par un agencement de tige filetée (60) commandée par les moyens (58) pour déplacer le châssis de support (2), laquelle tige filetée fait avancer les moyens de raclage (4) par rapport au châssis de support (2) lors du mouvement du châssis de support dans sa trajectoire circonférentielle autour de la portion d'extrémité de la conduite.

**Patentansprüche**

1. Werkzeug zum Vorbereiten der Oberflächen von Endbereichen von Rohren zur Verbindungsherstellung, mit einem Tragrahmen (2), der am Endbereich eines zu reinigenden Rohres befestigbar ist, mit einem Mittel (58) zum Bewegen des Tragrahmens in Umfangsrichtung um den Endbereich des Rohres, mit einem am Tragrahmen befestigten Mittel (14) zum Bearbeiten eines Bereiches der Außenfläche des Rohres, während der Tragrahmen in Umfangsrichtung um das Rohr wandert, **dadurch gekennzeichnet,** daß Mittel (60,64) zum fortschreitenden Bewegen des Bearbeitungsmittels (14) längs des Transportrahmens (2) und des Rohres (24), während der Transportrahmen in Umfangsrichtung um das Rohr wandert, vorgesehen sind derart, daß dem Bearbeitungsmittel (14) über die Oberfläche des Rohres hinweg eine schraubenförmige Bewegung erteilt ist.

2. Werkzeug nach Anspruch 1, dadurch gekennzeichnet, daß Rollen (20) vorgesehen sind, die im Betrieb zumindestens äußere Wandflächen des Rohres (24) ergreifen.

3. Werkzeug nach Anspruch 2, dadurch gekennzeichnet, daß mindestens eine weitere Rolle (26) vorgesehen ist, die mit einer inneren Wandfläche des Rohres (24) in Verbindung bringbar ist.

4. Werkzeug nach Anspruch 3, dadurch gekennzeichnet, daß Klemmittel (44,46,32) vorgesehen sind, mit denen eine Rohrwand zwischen den Rollen (20,26) klemmbar ist.

5. Werkzeug nach einem der Ansprüche 2 bis 4, dadurch gekennzeichnet, daß aus den Rollen (20,26) ausgewählte Rollen mit mit dem Rohr in Verbindung stehenden, aufgerauhten Oberflächen versehen sind.

6. Werkzeug nach Anspruch 4 oder 5, dadurch gekennzeichnet, daß die Klemmittel eine nokkengesteuerte Hebelanordnung aufweisen, mit der die weitere Rolle (26) zum Bearbeitungsmittel (14) hin vorspannbar ist.

7. Werkzeug nach Anspruch 4, 5 oder 6, dadurch gekennzeichnet, daß das Klemmittel zur Anpassung an einen Bereich von Rohrdurchmessern und von Konturen- oder Oberflächenunregelmäßigkeiten mit einer federvorgespannten Befestigung (38) versehen ist.

8. Werkzeug nach einem der vorhergehenden Ansprüche, dadurch gekennzeichnet, daß das Bearbeitungsmittel eine Schabervorrichtung (14) ist.

9. Werkzeug nach Anspruch 8, dadurch gekennzeichnet, daß die Schabervorrichtung ein Messer aufweist.

10. Werkzeug nach Anspruch 9, dadurch gekennzeichnet, daß das Messer mit einer federvorgespannten Befestigung (50) versehen ist, durch die ein konstanter Schneidekontakt des Messers mit dem Rohr aufrecht erhalten werden kann.

11. Werkzeug nach Anspruch 9 oder 10, dadurch gekennzeichnet, daß das Messer-Vorderteil eine Schneidkante (52) und einen dazu benachbarten Schneidrücken (56) aufweist, der im Betrieb eine äußere Wandfläche des Rohres zur Steuerung der Schnittiefe berührt.

12. Werkzeug nach Anspruch 11, dadurch gekennzeichnet, daß die Schneidkante zur Achse des Rohres geneigt angeordnet ist.

13. Werkzeug nach Anspruch 2, dadurch gekennzeichnet, daß zwei im Abstand angeordnete Paare von Rollen (20,22) und Mittel (18) zum Ändern des Längsabstandes, in welchem die Rollenpaare angeordnet sind, vorgesehen sind.

14. Werkzeug nach einem der vorhergehenden Ansprüche, dadurch gekennzeichnet, daß Mittel zum Bewegen des Bearbeitungsmittels eine Gewindespindelanordnung (60) aufweisen, die von dem Mittel (58) zum Bewegen des Tragrahmens (2) gesteuert ist und welche bewirkt, daß die Schabervorrichtung (4) bei der Bewegung des Tragrahmens in Umfangsrichtung um den Endbereich des Rohres sich relativ zu diesem Tragrahmen (2) vorwärtsbewegt.

FIG.1

FIG.2

FIG.3

FIG.4

FIG.5

FIG.6

FIG.7

FIG.8